# EUROPÄISCHE PATENTSCHRIFT

(11) **EP 0 854 070 B1**
(45) Veröffentlichungstag und Bekanntmachung des Hinweises auf die Patenterteilung: **31.10.2001**
(21) Anmeldenummer: 98100289.2
(22) Anmeldetag: 09.01.1998
(51) Int. Cl.: B60R 22/22

(54) **Gurtschloss mit Befestigungsbeschlag**
Seatbelt buckle and its anchorage fitting
Boucle de ceinture et sa ferrure de fixation

(30) Priorität: 20.01.1997 DE 29700908 U
(43) Veröffentlichungstag der Anmeldung: 22.07.1998
(73) Patentinhaber: TRW Occupant Restraint Systems GmbH & Co. KG, 73551 Alfdorf (DE)
(72) Erfinder: Haas, Peter, 73571 Göggingen (DE)
(74) Vertreter: Degwert, Hartmut, Dipl.-Phys.

(56) Entgegenhaltungen:
- EP-A- 0 004 485
- DE-A- 4 020 365
- DE-U- 8 812 887
- GB-A- 2 201 329
- US-A- 5 236 220

## Beschreibung

Die Erfindung betrifft ein Gurtschloß mit Befestigungsbeschlag zur fahrzeugfesten Montage, gemäß dem Oberbegriff des Anspruchs 1.

Das Gurtschloß bildet zusammen mit dem Befestigungsbeschlag eine auf dem Gebiet der Fahrzeuginsassen-Rückhaltetechnik allgemein bekannte Baugruppe. Das Gurtschloß dient dazu, eine verschiebbar auf einem Sicherheitsgurt angebrachte Steckzunge aufzunehmen, um einen Fahrzeuginsassen anzuschnallen. Der Befestigungsbeschlag dient dazu, das Gurtschloß fahrzeugfest anzubringen, beispielsweise an einem Fahrzeugsitz oder an der Fahrzeugkarosserie. Üblicherweise wird ein Drahtseilabschnitt dazu verwendet, das Gurtschloß mit dem Befestigungsbeschlag zu verbinden.

Aus der amerikanischen Patentschrift Nr. 4 638 534 ist ein Gurtschloß mit Befestigungsbeschlag zur fahrzeugfesten Montage bekannt, das eine fest mit dem Gurtschloß verbundene Haltelasche aufweist, die mit dem Befestigungsbeschlag verbunden ist. Die Haltelasche ist mit einer Öffnung versehen, mittels der sie drehbar auf einem Bolzen angebracht ist, der an dem Befestigungsbeschlag befestigt ist. Eine Schraubenfeder ist vorgesehen, die das Gurtschloß relativ zu dem Befestigungsbeschlag rotatorisch um die Mittelachse des Bolzens und rotatorisch um eine zur Mittelachse des Bolzens und zur Längsachse des Gurtschlosses senkrechte Achse in eine Ruhestellung beaufschlagt. Die Öffnung in der Haltelasche ist mit einer Kunststoffbuchse versehen, die auf dem Bolzen spielbehaftet gelagert ist. Setzt sich beispielsweise ein Fahrzeuginsasse auf das Gurtschloß, so kann dieses lediglich in zwei Richtungen ausweichen.

Weiterhin ist aus der amerikanischen Patentschrift Nr. 4 132 434 ein Gurtschloß mit Befestigungsbeschlag für die Montage an einem Fahrzeugsitz bekannt. Eine Haltelasche ist fest mit dem Gurtschloß verbunden. An dem Befestigungsbeschlag ist ein Bolzen angebracht, der an seinem vom Befestigungsbeschlag abgewandten Ende einen Kugelkopf aufweist. Die Haltelasche umgreift mit Hilfe einer entsprechenden Ausformung und einem Haltestück den Kugelkopf des Bolzens. Zwischen Befestigungsbeschlag und Haltelasche ist eine Schraubenfeder vorgesehen, die das den Bolzen und die Haltelasche verbindende Kugelgelenk um dessen Bewegungsachsen in eine Ruhestellung beaufschlagt.

Die amerikanische Patentschrift Nr. 4 451 087 hat ein Gurtschloß zum Gegenstand, das zur Montage an einem Fahrzeugsitz vorgesehen ist. Die Haltelasche des Gurtschlosses wird über einen Bolzen an einem Befestigungsbeschlag befestigt und ist um die Achse des Bolzens beweglich. Damit die Finger oder das Bein eines Fahrzeuginsassen nicht durch einen offenen Begrenzungsanschlag eingeklemmt werden, weist das Gurtschloß einen integrierten Anschlagfinger auf, der in ein Langloch im Befestigungsbeschlag eingreift.

In der amerikanischen Patentschrift Nr. 4 222 610 ist ein Gurtschloß beschrieben, das zur Montage an einer Fahrzeugtür vorgesehen ist. Die Haltelasche des Gurtschlosses ist zweigeteilt, wobei ein erster, zur Befestigung an der Fahrzeugtüre vorgesehener Abschnitt und ein zweiter, mit dem Gurtschloß verbundener Abschnitt über ein Scharnier beweglich verbunden sind. Das Gurtschloß selbst ist mit dem zweiten Abschnitt drehbar über einen Bolzen verbunden.

In der amerikanischen Patentschrift Nr. 4 536 010 ist ein Sicherheitsgurtsystem beschrieben, das einen Umlenkbeschlag aufweist, der mit einem Befestigungsbeschlag drehbar gelagert ist. Der Befestigungsbeschlag ist wiederum an einem Fahrzeugsitz befestigt. Der Umlenkbeschlag ist durch einen Befestigungsbolzen mit dem Befestigungsbeschlag verbunden und wird durch eine Schraubenfeder um die Mittelachse des Befestigungsbolzens in eine Ruhelage vorgespannt.

Schließlich ist aus der amerikanischen Patentschrift US. 5 236 220 ein gattungsgemäßes Gurtschloß mit Befestigungsbeschlag bekannt, bei dem ein Mechanismus für eine platzsparende Unterbringung des Gurtschlosses in einem dafür vorgesehenen Staufach vorgesehen ist. An dem Gurtschloß ist eine Haltelasche befestigt, die verschieblich auf einem ersten Gelenkteil gehalten ist, das wiederum mittels eines Drehgelenks mit einem ersten Schenkel des Befestigungsbeschlags verbunden ist. Weiterhin ist die Platte über einen Bolzen mit einem zweiten Gelenkteil verbunden, der an einem zweiten Schenkel des Beschlags drehbar gelagert ist, wobei der Bolzen in einem Langloch des ersten Gelenkteils verschoben werden kann. Eine Drehfeder beaufschlagt das Gurtschloß zum einen translatorisch in einer zur Längsachse des Gurtschlosses etwa parallelen Richtung sowie rotatorisch um die Mittelachse des Drehgelenks, mit dem der erste Schenkel am Befestigungsbeschlag gelagert ist, in eine Ruhestellung.

Eine Anforderung an ein gattungsgemäßes Gurtschloß besteht zum einen darin, daß es relativ zu dem Befestigungsbeschlag bewegbar ist, so daß es sich entweder jederzeit in eine für die Funktion optimale Stellung ausrichten kann oder aus einer temporär störenden Stellung herausbewegen läßt, und zum anderen darin, daß sich das Gurtschloß nach einer solchen Verstellung selbsttätig wieder in eine Ruhestellung bewegt, die für ein Einführen der Steckzunge in das Gurtschloß optimal ist.

Zu diesem Zweck ist gemäß der Erfindung bei einem Gurtschloß der eingangs genannten Art vorgesehen, daß die Öffnung in der Haltelasche ein Langloch ist, dessen Längsachse etwa parallel zur Längsachse des Gurtschlosses ist, und daß das Rückstellmittel das Gurtschloß relativ zu dem Befestigungsbeschlag sowohl translatorisch in einer Richtung parallel zur Längsachse des Gurtschlosses, rotatorisch um die Mittelachse des Bolzens als auch rotatorisch um eine zur Mittelachse des Bolzens und zur Längsachse des Gurtschlosses senkrechte Achse, in die Ruhestellung beaufschlagt. Durch die Erfindung ist somit ein Gurtschloß geschaffen, das aus einer Ruhestellung herausbewegt werden kann, um sich beispielsweise an einen optimalen Verlauf des Gurtbandes einer in das Gurtschloß eingesteckten Steckzunge anzupassen, oder das umgeklappt werden kann, um beispielsweise das Umlegen einer Rücksitzbank zu ermöglichen. Nachdem das Gurtschloß freigegeben wird, kehrt es automatisch wieder in seine Ruhestellung zurück. Die Führung des Gurtschlosses auf dem Bolzen ergibt zusammen mit dem Rückstellmittel eine sehr viel genauere Positionierung des Gurtschlosses und eine sehr viel größere Rückstellwirkung als beispielsweise bei einem Gurtschloß, das von einem Drahtseilabschnitt gehalten wird.

Bei der Erfindung ergibt sich eine ausgezeichnete Beweglichkeit des Gurtschlosses relativ zu dem Befestigungsbeschlag in drei Bewegungsrichtungen. Durch eine geeignete Anbringung des Befestigungsbeschlags relativ zum Fahrzeug läßt sich mittels dieser drei möglichen Bewegungsrichtungen erzielen, daß das Gurtschloß für jeden denkbaren Fall, der ein Verlassen seiner Ruhestellung notwendig macht, geeignet beweglich ist. Eine translatorische Bewegung des Gurtschlosses in einer Richtung parallel zur Längsachse des Gurtschlosses erlaubt ein Abtauchen des Gurtschlosses um einige Zentimeter, wenn sich beispielsweise ein Fahrzeuginsasse auf das Gurtschloß setzt. Dies ist insbesondere relevant für an einer Rücksitzbank montierte Gurtschlösser. Eine rotatorische Bewegung um die Mittelachse des Bolzens ermöglicht dem Gurtschloß, sich in der oben dargestellten Weise zu verschwenken, insbesondere in der Fahrzeuglängsrichtung. Eine rotatorische Bewegung um eine zur Mittelachse des Bolzens und zur Längsachse des Gurtschlosses senkrechte Achse ermöglicht dem Gurtschloß, sich quer zur Fahrtrichtung in beide Richtungen zu verschwenken, um sich an den Verlauf des Sicherheitsgurtes anzupassen. Ein besonderer Vorteil der Erfindung liegt darin, daß ein einziges Rückstellmittel ausreicht, um das Gurtschloß nach einer Bewegung in den drei möglichen Bewegungsrichtungen wieder in die Ruhestellung zurückzustellen. Somit ergibt sich bei größtmöglichem Komfort ein geringer Herstellungsaufwand.

Gemäß der bevorzugten Ausführungsform der Erfindung ist vorgesehen, daß das Rückstellmittel eine Drahtfeder ist. Auf diese Weise läßt sich das Rückstellmittel besonders kostengünstig herstellen.

Vorzugsweise ist vorgesehen, daß die Feder einen ersten Spiralabschnitt aufweist, der auf dem Bolzen angeordnet ist, sowie einen zweiten Spiralabschnitt, der zwischen dem ersten Spiralabschnitt und einem Ende der Feder angeordnet ist, das sich an dem Gurtschloß abstützt. Bei dieser Gestaltung ergibt sich ein besonders großer Bewegungsbereich, der von der Feder zugelassen wird. Ferner ist die Rückstellwirkung der Feder, die für jede einzelne zugelassene Bewegung des Gurtschlosses relativ zum Befestigungsbeschlag bereitgestellt wird, unabhängig von der für andere Bewegungen vorgesehenen Rückstellwirkung.

Die Erfindung wird nachfolgend anhand von bevorzugten Ausführungsformen erläutert, die in den beigefügten Zeichnungen dargestellt sind. In diesen zeigen:
- Fig. 1 in einer Seitenansicht ein erfindungsgemäßes Gurtschloß mit Befestigungsbeschlag gemäß einer ersten Ausführungsform;
- Fig. 2 das Gurtschloß mit Befestigungsbeschlag von Fig. 1 in einer weiteren Seitenansicht;
- Fig. 3 eine perspektivische Ansicht des Gurtschlosses mit Befestigungsbeschlag von Fig. 1;
- Fig. 4 in einer perspektivischen Ansicht die bei dem Gurtschloß mit Befestigungsbeschlag von Fig. 1 verwendete Feder;
- Fig. 5 in einer Seitenansicht ein erfindungsgemäßes Gurtschloß mit Befestigungsbeschlag gemäß einer zweiten Ausführungsform der Erfindung;
- Fig. 6 das Gurtschloß mit Befestigungsbeschlag von Fig. 5 in einer weiteren Seitenansicht;
- Fig. 7 in einer perspektivischen Ansicht das Gurtschloß mit Befestigungsbeschlag von Fig. 5; und
- Fig. 8 die bei dem Gurtschloß mit Befestigungsbeschlag von Fig. 5 verwendete Feder.

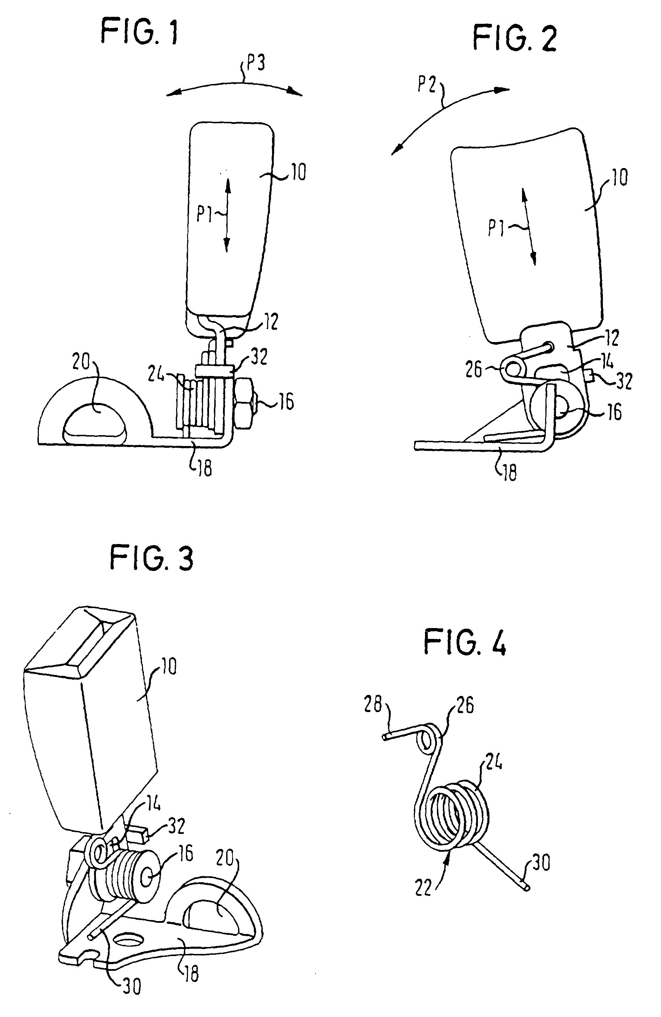

In den Figuren 1 bis 3 ist ein Gurtschloß mit Befestigungsbeschlag gemäß einer ersten Ausführungsform der Erfindung dargestellt. Das Gurtschloß, das mit dem Bezugszeichen 10 versehen ist, weist eine Haltelasche 12 auf, die an ihrem vom Gurtschloß 10 beabstandeten freien Ende mit einem Langloch 14 versehen ist. In das Langloch 14 greift ein Bolzen 16 ein, der mit einem Befestigungsbeschlag 18 verbunden ist. Der Befestigungsbeschlag 18 dient dazu, das Gurtschloß 10 fahrzeugfest zu montieren, und weist zu diesem Zweck eine Befestigungsöffnung 20 auf. Auf dem Befestigungsbolzen 16 ist eine Feder 22 angebracht, die im Detail in Fig. 4 gezeigt ist.

Die Feder 22 ist eine Drahtfeder und weist einen ersten Spiralabschnitt 24 auf, der auf dem Befestigungsbolzen 16 angeordnet ist, sowie einen zweiten Spiralabschnitt 26, der zwischen dem ersten Spiralabschnitt 24 und einem freien Ende 28 der Feder angeordnet ist, das an der Haltelasche 12 angreift. Das andere freie Ende 30 der Feder 22 stützt sich an dem Befestigungsbeschlag 18 ab.

Das Gurtschloß 10 kann sich relativ zu dem Befestigungsbeschlag 18 in drei Richtungen bewegen: Zum einen ist eine translatorische Bewegung des Gurtschlosses 10 in einer Richtung parallel zur Längsachse des Gurtschlosses möglich, also in der Richtung des Doppelpfeils P1. Diese Bewegung ist möglich durch eine Verschiebung des Langlochs 14 auf dem Bolzen 16. Weiterhin ist eine rotatorische Bewegung um die Mittelachse des Bolzens möglich, also in der Richtung des Doppelpfeils P2. Diese Bewegung erfolgt durch eine Drehung der Haltelasche 12 auf dem Befestigungsbolzen 16. Schließlich ist eine rotatorische Bewegung um eine Achse möglich, die senkrecht zur Mittelachse des Bolzens und senkrecht zur Längsachse des Gurtschlosses ist, also in der Richtung des Doppelpfeils P3. Diese Bewegung ist möglich durch ein Kippen der Haltelasche 12 auf dem Bolzen 16 aus einer zur Mittelachse des Bolzens 16 senkrechten Stellung heraus.

Bei einer Bewegung des Gurtschlosses 10 relativ zu dem Befestigungsbeschlag 18 in jeder der Richtungen P1, P2 und P3 wird das Gurtschloß 10 von der Feder 22 in die in den Figuren 1 bis 3 dargestellte Ruhestellung zurückgestellt. Bei einer Bewegung in der Richtung des Pfeils P1 wird die Rückstellwirkung vom zweiten Spiralabschnitt 26 der Feder 22 bereitgestellt. Die Ruhestellung ist in dieser Bewegungsrichtung durch Anlage des Bolzens 16 an dem vom Gurtschloß 10 entfernten Ende des Langlochs 14 bestimmt. Bei einer Bewegung in der Richtung des Pfeils P2 wird die Rückstellwirkung vom ersten Spiralabschnitt 24 bereitgestellt, der bei einer solchen Bewegung einer Verdrehung um die Mittelachse des Bolzens 16 herum ausgesetzt ist. Die Ruhestellung ist für Bewegungen entlang der Richtung des Pfeils P2 durch einen am Befestigungsbeschlag 18 vorgesehenen Anschlag 32 bestimmt. Für Bewegungen in der Richtung des Pfeils P3 wird die Rückstellwirkung ebenfalls vom ersten Spiralabschnitt 24 bereitgestellt. Im Gegensatz zu Bewegungen in der Richtung des Pfeils P2 wird der erste Spiralabschnitt 24 bei Bewegungen in der Richtung des Pfeils P3 nicht um die Mittelachse des Bolzens 16 herum verdreht, sondern in einer Richtung parallel zu dieser Mittelachse zusammengedrückt. Bei einer Bewegung des Gurtschlosses 10 in der Richtung des Pfeils P3 wird der erste Spiralabschnitt 24 also in bezüglich des Bolzens 16 axialer Richtung komprimiert. Für eine geeignete Rückstellwirkung bei Bewegungen in der Richtung des Pfeils P3 ist es also wesentlich, daß der erste Spiralabschnitt 24 zwischen dem bezüglich Fig. 1 linken Ende des Bolzens 16 und der Haltelasche 12 zwar vorgespannt ist, die Windungen des ersten Spiralabschnitts 24 bei in der Ruhestellung befindlichem Gurtschloß jedoch noch nicht aneinander anliegen. Die Ruhestellung des Gurtschlosses 10 wird bei Bewegungen in der Richtung des Pfeils P3 durch flächige Anlage des das Langloch 14 umgebenden Abschnittes der Haltelasche 12 an dem den Bolzen 16 umgebenden Abschnitt des Befestigungsbeschlags 18 bestimmt.

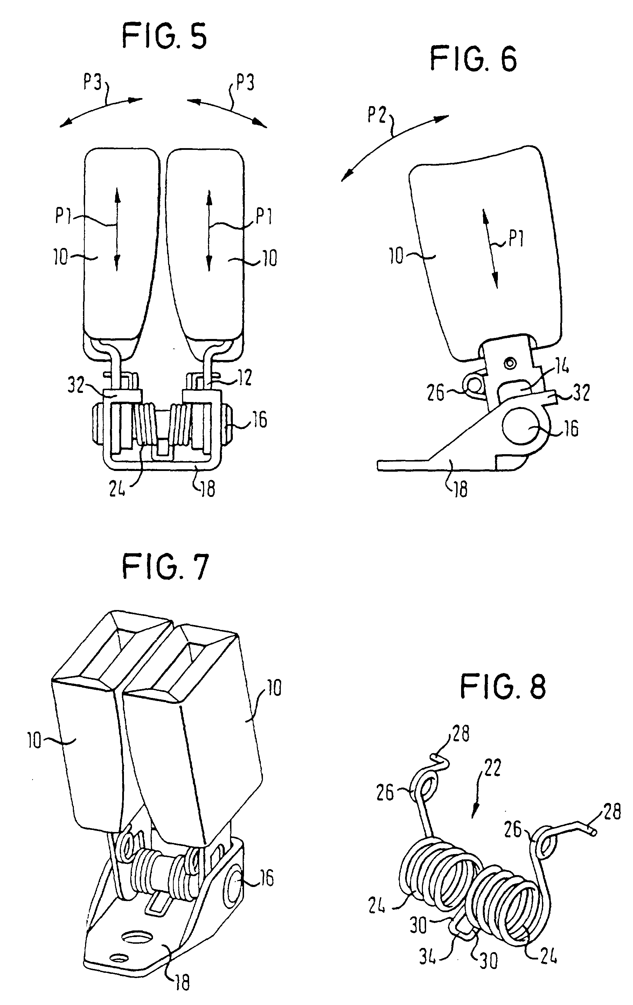

In den Figuren 5 bis 7 ist eine zweite Ausführungsform der Erfindung dargestellt. Elemente dieser Ausführungsform, die von der ersten Ausführungsform bekannt sind, werden mit denselben Bezugszeichen bezeichnet, und hinsichtlich ihrer Funktion wird auf die obigen Erläuterungen Bezug genommen. Nachfolgend werden lediglich die Unterschiede der zweiten Ausführungsform gegenüber der ersten Ausführungsform erläutert.

Im Gegensatz zur ersten Ausführungsform ist bei der zweiten Ausführungsform vorgesehen, daß an einem einzigen Befestigungsbeschlag 18 zwei Gurtschlösser 10 angeordnet sind. Die beiden Haltelaschen 12 der Gurtschlösser 10 sind auf ein und demselben Bolzen 16 angeordnet. Zwischen den beiden Haltelaschen 12 ist die Feder 22 angeordnet, die im Detail in Fig. 8 dargestellt ist. Der Unterschied zur in Fig. 4 dargestellten Feder besteht darin, daß die beiden freien Enden 30 jeder für ein Gurtschloß 10 vorgesehenen Feder durch einen Mittelsteg 34 miteinander verbunden sind. Der einzige Unterschied der Wirkungsweise der in Fig. 8 dargestellten Feder gegenüber der in Fig. 4 dargestellten Feder besteht darin, daß der erste Spiralabschnitt 24 bei Bewegungen des Gurtschlosses 10 sich nicht an einem vergrößerten Ende des Bolzens 16 abstützt, sondern über das freie Ende 30 am Befestigungsbeschlag 18 sowie, falls die an dieser Stelle bereitgestellte Reibungskraft überwunden wird, über den ersten Spiralabschnitt 24 des anderen Gurtschlosses an dessen Haltelasche 12.

## Patentansprüche

1. Gurtschloß (10) mit Befestigungsbeschlag (18) zur fahrzeugfesten Montage, mit einer fest mit dem Gurtschloß (10) verbundenen Haltelasche (12), die mit dem Befestigungsbeschlag (18) verbunden ist, wobei die Haltelasche (12) mit einer Öffnung (14) versehen ist, mittels der sie drehbar auf einem Bolzen (16) angebracht ist, der an dem Befestigungsbeschlag (18) festgelegt ist, und ein Rückstellmittel (22) vorgesehen ist, welches das Gurtschloß (10) relativ zu dem Befestigungsbeschlag (18) in eine Ruhestellung beaufschlagt,
**dadurch gekennzeichnet,**
**daß** die Öffnung in der Haltelasche (12) ein Langloch (14) ist, dessen Längsachse etwa parallel zur Längsachse des Gurtschlosses (10) ist, und daß das Rückstellmittel (22) das Gurtschloß (10) relativ zu dem Befestigungsbeschlag (18) sowohl translatorisch in einer Richtung parallel zur Längsachse des Gurtschlosses (10), rotatorisch um die Mittelachse des Bolzens (16) als auch rotatorisch um eine zur Mittelachse des Bolzens (16) und zur Längsachse des Gurtschlosses (10) senkrechte Achse in die Ruhestellung beaufschlagt.

2. Gurtschloß nach Anspruch 1, **dadurch gekennzeichnet, daß** das Rückstellmittel eine Drahtfeder (22) ist.

3. Gurtschloß nach Anspruch 2, **dadurch gekennzeichnet, daß** die Feder (22) einen ersten Spiralabschnitt (24) aufweist, der auf dem Bolzen (16) angeordnet ist, sowie einen zweiten Spiralabschnitt (26), der zwischen dem ersten Spiralabschnitt (24) und einem Ende (78) der Feder (22) angeordnet ist, das sich an dem Gurtschloß (10) abstützt.

4. Gurtschloß nach einem der vorhergehenden Ansprüche, **dadurch gekennzeichnet, daß** die Ruhestellung des Gurtschlosses (10) bezüglich der translatorische Bewegung durch ein Ende des Langlochs (14) bestimmt ist.

5. Gurtschloß nach einem der vorhergehenden Ansprüche, **dadurch gekennzeichnet, daß** die Ruhestellung des Gurtschlosses (10) bezüglich der rotatorischen Bewegung um die Mittelachse des Bolzens (16) durch einen Anschlag an dem Befestigungsteil (32) bestimmt ist.

6. Gurtschloß nach einem der vorhergehenden Ansprüche, **dadurch gekennzeichnet, daß** die Ruhestellung des Gurtschlosses (10) bezüglich der rotatorischen Bewegung um die zur Mittelachse des Bolzens (16) und zur Längsachse des Gurtschlosses (10) senkrechte Achse durch flächige Anlage des das Langloch (14) umgebenden Abschnittes der Haltelasche (12) an dem Befestigungsbeschlag (18) bestimmt ist.

## Claims

1. A belt buckle (10) with fastener fitting (18) for vehicle-fixed mounting, comprising a carrier plate (12) firmly connected to said belt buckle (10), said carrier plate (12) being connected to said fastener fitting (18) and being provided with an opening (14) by means of which said carrier plate (12) is mounted rotatably on a pin (16) fixed to said fastener fitting (18), and wherein a return means (22) is provided which urges said belt buckle (10) into a resting position relative to said fastener fitting (18), **characterized in that** said opening in said carrier plate (12) is an elongated hole (14), the longitudinal axis of which is roughly parallel to the longitudinal axis of said belt buckle (10), and that said return means (22) urges said belt buckle (10) into the resting position relative to said fastener fitting (18) both translationally in a direction parallel to the longitudinal axis of said belt buckle (10), rotationally about the centerline of said pin (16) and also rotationally about an axis perpendicular to the centerline of said pin (16) and to the longitudinal axis of said belt buckle (10).

2. The belt buckle as set forth in claim 1, **characterized in that** said return means is a wire spring (22).

3. The belt buckle as set forth in claim 2, **characterized in that** said spring (22) comprises a first spiral portion (24) arranged on said pin (16), and a second spiral portion (26) arranged between said first spiral portion (24) and one end (28) of said spring (22), said end (28) being supported by said belt buckle (10).

4. The belt buckle as set forth in any of the preceding claims, **characterized in that** the resting position of said belt buckle (10) in relation to the translational movement is defined by one end of said elongated hole (14).

5. The belt buckle as set forth in any of the preceding claims, **characterized in that** the resting position of said belt buckle (10) in relation to the rotational movement about the centerline of said pin (16) is defined by a stop on said fastener part (32).

6. The belt buckle as set forth in any of the preceding claims, **characterized in that** the resting position of said belt buckle (10) in relation to the rotational movement about the axis perpendicular to the centerline of said pin (16) and to the longitudinal axis of said belt buckle (10) is defined by surface area contact of the portion of said carrier plate (12) surrounding said elongated hole (14) with said fastener fitting (18).

## Revendications

1. Serrure de ceinture (10) comprenant une ferrure de fixation (18) pour montage solidaire au véhicule, une patte de retenue (12) solidarisée à la serrure de ceinture (10), qui est reliée à la ferrure de fixation (18), la patte de retenue (12) étant pourvue d'une ouverture (14) au moyen de laquelle elle est montée pivotante sur un boulon (16) qui est fixé à la ferrure de fixation (18), et un moyen de rappel (22) étant prévu pour ramener la serrure de ceinture (10) en une position de repos par rapport à la ferrure de fixation (18), **caractérisée en ce que** l'ouverture ménagée dans la patte de retenue (12) est un trou oblong (14), dont l'axe longitudinal est sensiblement parallèle à l'axe longitudinal de la serrure de ceinture (10), et **en ce que** le moyen de rappel (22) ramène la serrure de ceinture (10) en position de repos par rapport à la ferrure de fixation (18) non seulement en translation dans une direction parallèle à l'axe longitudinal de la serrure de ceinture (10), mais aussi par rotation autour de l'axe médian du boulon (16) et par rotation autour d'un axe perpendiculaire à l'axe médian du boulon (16) et à l'axe longitudinal de la serrure de ceinture (10).

2. Serrure de ceinture selon la revendication 1, **caractérisée en ce que** le moyen de rappel est un ressort à boudin (22).

3. Serrure de ceinture selon la revendication 2, **caractérisée en ce que** le ressort (22) présente une première portion spiralée (24) disposée sur le boulon (16) ainsi qu'une seconde portion spiralée (26) disposée entre la première portion spiralée (24) et une extrémité (78) du ressort (22) qui prend appui sur la serrure de ceinture (10).

4. Serrure de ceinture selon l'une quelconque des revendications précédentes,
**caractérisée en ce que** la position de repos de la serrure de ceinture (10) par rapport au déplacement en translation est déterminée par une extrémité du trou oblong (14).

5. Serrure de ceinture selon l'une quelconque des revendications précédentes,
**caractérisée en ce que** la position de repos de la serrure de ceinture (10) par rapport au déplacement en rotation autour de l'axe médian du boulon (16) est déterminée par une butée sur la partie de fixation (32).

6. Serrure de ceinture selon l'une quelconque des revendications précédentes,
**caractérisée en ce que** la position de repos de la serrure de ceinture (10) par rapport au déplacement en rotation autour de l'axe médian du boulon (16) et à l'axe longitudinal de la serrure de ceinture (10) est déterminée par une application de la portion de la patte de retenue (12), qui entoure le trou oblong (14), contre la ferrure de fixation (18).
